# EUROPÄISCHE PATENTSCHRIFT

(11) **EP 0 815 272 B1**
(45) Veröffentlichungstag und Bekanntmachung des Hinweises auf die Patenterteilung: **22.11.2000**
(21) Anmeldenummer: 97900140.1
(22) Anmeldetag: 16.01.1997
(51) Int. Cl.: C22B 7/04, C21B 3/04, C04B 7/147

(54) **GEWINNUNG VON ROHEISEN, FERRO- UND/ODER BUNTMETALL-LEGIERUNGEN ZUSAMMEN MIT SYNTHETISCHER HOCHOFENSCHLACKE AUS MÜLLVERBRENNUNGSRÜCKSTÄNDEN UND STAHLWERKSSCHLACKE**
METHOD OF PRODUCING PIG IRON, ALLOYS OF FERROUS METAL AND/OR NONFERROUS METAL WITH SYNTHETIC BLAST FURNACE SLAG FROM RESIDUES OF INCINERATED WASTE AND STEELWORKS SLAG
PROCEDE DE PRODUCTION DE FONTE BRUTE, DE FERRO-ALLIAGES ET/OU D'ALLIAGES DE METAUX LOURDS NON FERREUX CONJOINTEMENT AVEC DES SCORIES SYNTHETIQUES DE HAUT FOURNEAU ISSUES DE RESIDUS D'INCINERATION D'ORDURES ET DE SCORIES D'ACIERIE

(30) Priorität: 17.01.1996 AT 7996
(43) Veröffentlichungstag der Anmeldung: 07.01.1998
(73) Patentinhaber: HOLDERBANK FINANCIERE GLARUS AG, CH-8750 Glarus (CH)
(72) Erfinder: EDLINGER, Alfred, CH-5400 Baden (CH); WASCHNIG, Albert, A-9341 St. Stefan (AT)
(74) Vertreter: Haffner, Thomas M., Dr.
(86) Internationale Anmeldenummer: AT9700006
(87) Internationale Veröffentlichungsnummer: WO9726381

(56) Entgegenhaltungen:
- EP-A- 0 670 188
- WO-A-94/17214
- WO-A-95/07365
- WO-A-96/34989
- FR-A- 2 172 206
- US-A- 5 405 429

## Beschreibung

Die Erfindung bezieht sich auf ein Verfahren zum Herstellen von Roheisen, Buntmetall-Legierungen, Ferrochromium-Carbure oder kohlenstoffreiem Ferrochromium und synthetischen Hochofenschlakken unter Verwendung von metalloxidhaltigen Müllverbrennungsrückständen oder Schlacken.

Für die Aufarbeitung von Müllverbrennungsrückständen sind eine Reihe von Verfahrensvarianten vorgeschlagen worden, wobei unter anderem bereits vorgeschlagen wurde, Müllverbrennungsrückstände, wie sie sich nach weitgehend vollständiger Oxidation in Form von Schlacken od.dgl. ergeben, durch eine mehrstufige Reduktion nachzubehandeln, wobei Buntmetalle rückgewonnen werden können. Die jeweils an Metallen abgereicherte Phase konnte bei den bisher bekannten Verfahren granuliert werden und als Puzzolan einem Zement zugesetzt werden.

Auch die Verwendung von Hochofenschlacke im Zuge der Zementherstellung ist bereits Stand der Technik. Hochofenschlakke zeichnet sich durch latenthydraulische Eigenschaften aus und kann daher unmittelbar nach entsprechender Zerkleinerung bzw. Granulation einem Mischzement zugesetzt werden. Durch entsprechende Behandlung der Hochofenschlacke kann aber auch unmittelbar eine bestimmte Zementqualität zumindest in bezug auf die Zusammensetzung angesteuert werden. Im Hüttenbetrieb fallen aber auch beträchtliche Mengen an Stahlschlacken an, welche sich durch vergleichsweise schlechte hydraulische Eigenschaften auszeichnen. Derartige Stahlschlacke erfordert daher in der Regel eine aufwendige Nachbearbeitung. Die Verhaldung von Stahlschlakke wird mit zunehmender Menge nicht zuletzt auf Grund der Chromgehalte derartiger Schlacken problematisch.

Die Erfindung zielt nun darauf ab, derartige Stahlwerksschlacke im Rahmen eines Gesamtverfahrens in Kombination mit einem Müllverbrennungsverfahren sinnvoll weiterzuverarbeiten und auf zuarbeiten, sodaß unmittelbar brauchbare Produkte, wie beispielsweise eine synthetische Hochofenschlacke, erzielt werden kann, welche in der Folge beispielsweise einem Mischzement aufgegeben werden kann.

Zur Lösung dieser Aufgabe besteht das erfindungsgemäße Verfahren im wesentlichen darin, daß die Einsatzmaterialien der Müllverbrennung, wie z.B. Autoschredderleichtfraktionen bzw. Hüttenstäube zumindest teilweise oxidiert und anschließend unter Abscheidung von Nichteisen-Metallen oder Legierungen reduziert werden, worauf die an Metallen oder Legierungen abgereicherte oxidische Schlackenphase gegebenenfalls unter weiterem Zusatz von Hüttenstäuben mit flüssiger Stahlwerksschlacke vermischt wird, worauf unter Absenkung der Viskosität der Stahlwerksschlacke Rohstahl abgezogen wird und der verbleibende Schlackenanteil einer weiteren Reduktion unter Gewinnung von Roheisen und gegebenenfalls Fe-Chromlegierungen unterworfen wird, worauf die resultierende synthetische Hochofenschlacke ausgebracht wird. Dadurch, daß die Einsatzmaterialien der Müllverbrennung, wie z.B. die Autoschredderleichtfraktionen, zumindest teilweise oxidiert werden, wird zunächst die Voraussetzung geschaffen, um Nichteisenmetalle bzw. Buntmetalle abzuscheiden. Auf diese Weise wird eine an derartigen Metallen oder Legierungen abgereicherte oxidische eisenoxidhaltige Schlackenphase gebildet und dadurch, daß diese Schlackenphase gegebenenfalls unter Zusatz von gleichfalls schwer zu entsorgenden Hüttenstäuben mit flüssiger Stahlwerksschlacke vermischt wird, wird zum einen die Möglichkeit geschaffen, die Viskosität von Stahlschlacke wesentlich zu senken und zum anderen die Voraussetzung geschaffen, um aus derartigen Stahlschlacken den relativ hohen Eisenoxidanteil in relativ einfacher Weise zu reduzieren und abzutrennen. Wesentliche Voraussetzung hiefür ist zunächst die Absenkung der Viskosität, wie sie durch die Vermischung mit der oxidischen Schlackenphase aus der Müllverbrennung möglich wird. Eine derartige niedrig viskose, hohe Mengen an Eisenoxiden enthaltende Schlacke kann in der Folge in einfacher Weise einer weiteren Reduktion unter Gewinnung von Roheisen und gegebenenfalls Eisenchromlegierungen unterworfen werden, wobei aus der ursprünglich relativ schwer weiter verarbeitbaren Stahlschlacke unmittelbar eine synthetische Hochofenschlacke gebildet wird. Die synthetische Hochofenschlacke zeichnet sich durch einen wesentlich geringeren Eisenoxidgehalt sowie keine toxischen Schwermetalle aus, wobei die Rückgewinnung der in der Stahlwerks- bzw. LD-Schlacke enthaltenen Eisenmenge als Rohstahl die Wirtschaftlichkeit des Verfahrens wesentlich verbessert.

Das erfindungsgemäße Verfahren kann hiebei in besonders vorteilhafter Weise in einem bodenblasenden Konverter durchgeführt werden, wodurch die thermische Bilanz verbessert werden kann. Wenn in einen derartigen Konverter beispielsweise Kohlenstoff und Sauerstoff eingetragen werden, kann eine entsprechende Menge an Kohlenmonoxid gebildet werden, welche in der Folge nachverbrannt werden kann.

Um sicherzustellen, daß während einer ersten Reduktion die gesondert auszutragenden Metalle Chrom, Mangan und/oder Vanadium in der Schlacke verbleiben und nicht in Roheisen gelöst werden, wird mit Vorteil das erfindungsgemäße Verfahren so durchgeführt, daß eine erste Reduktion bis zu einem FeO-Gehalt der Schlacke von mehr als 1 Gew.-%, vorzugsweise mehr als 2 Gew.-% und weniger als 5 Gew.-%, vorgenommen wird und daß eine zweite Reduktion mit von C verschiedenen Reduktionsmitteln, wie z.B. Al, zum Abscheiden von Cr, Mn und oder V vorgenommen wird. Ein Eisenoxidgehalt der Schlacke von mehr als 1 Gew.-% und vorzugsweise mehr als 2 Gew.-% stellt hiebei sicher, daß Chrom, Mangan und/oder Vanadium erst in der nachfolgenden Reduktion abgeschieden werden. Die Verwendung von von Kohlenstoff verschiedenen Reduktionsmitteln, wie z.B. Aluminium, führt hiebei beispielsweise zu kohlenstoffreiem Ferrochromium und wertvollen Legierungen, bei denen ein geringer Kohlenstoffgehalt vorteilhaft ist.

Eine bevorzugte Verwertung der synthetischen Hochofenschlacke, wie sie durch das erfindungsgemäße Verfahren gebildet werden kann, besteht darin, daß die synthetische Hochofenschlakke granuliert und gemeinsam mit granulierter puzzolanischer Schlakke aus der Müllverbrennung als Mischzement eingesetzt wird.

Um die geforderte Reduktion der Viskosität und damit das Ausbringen von Rohstahl aus dem Schlackengemisch zu erleichtern, wird mit Vorteil das Verfahren so durchgeführt, daß die an Nichteisen-Metallen oder Legierungen abgereicherte oxidische Schlackenphase der Müllverbrennung in einem Gewichtsverhältnis von 30 zu 70 bis 50 zu 50 mit Stahlwerks- bzw. LD-Schlacke vermischt wird.

Die Reduktion ebenso wie die Absenkung der Viskosität wird durch Ansäuern begünstigt, wobei mit Vorteil so vorgegangen wird, daß der Stahlwerks- bzw. LD-Schlacke vor oder während der Vermischung mit der Müllverbrennungsschlacke Al₂O₃ zugesetzt wird. Ein weiterer wesentlicher Vorteil der Al₂O₃-Zugabe liegt hiebei in einer drastisch verlängerten Zustellungszeit. Die Feuerfestzustellung von Konvertern besteht üblicherweise aus Magnesit. Das Al₂O₃ reagiert mit Magnesit zu MgAl₂O₄. Ein derartiger Magnesa-Spinell bildet einen extrem guten Feuerfestschutz an der Grenzfläche. Die Feuerfestzustellung ergibt somit mit der Schlacke eine in Betrieb sich verbessernde Korrosionsbeständigkeit mit verbessertem Feuerfestschutz.

Mit Vorteil wird das erfindungsgemäße Verfahren hiebei so durchgeführt, daß Al₂O₃ der Schlacke in Mengen von 10 bis 25 Gew.-% bezogen auf die reduzierte Schlacke zugesetzt wird. Eine derartige Bemessung der Menge des zugesetzten Al₂O₃ führt zu einer signifikanten Erhöhung der Frühfestigkeit eines in der Folge erhaltenen Mischzementes.

Die Aufarbeitung der Müllverbrennungsschlacke kann nach bekannten Verfahren erfolgen. Mit Vorteil wird im Rahmen des erfindungsgemäßen Verfahrens dieses Verfahren jedoch so durchgeführt, daß die Abtrennung der Metalle oder Legierungen aus der Müllverbrennungsschlacke in einer zweistufigen Reduktion über einem Metallbad erfolgt. Um sicherzustellen, daß neben einer Autoschredderleichtfraktion auch nennenswerte Mengen an Hüttenstäuben gemeinsam mit LD-Schlacke aus dem Stahlwerk entsorgt werden können, wird unter Einhaltung der geforderten Bedingungen für die Viskositätsabsenkung und die nachfolgende Reduktion zur Abtrennung von Rohstahl so vorgegangen, daß die Müllverbrennung unter Einsatz von Schredderleichtfraktionen und Hütten- oder Müllverbrennungsstäuben im Gewichtsverhältnis 0,7 bis 1,5 zu 2 vorgenommen wird.

Das erfindungsgemäße Verfahren kann prinzipiell mit einer gesonderten Mischvorrichtung für die Schlacke oder unmittelbar in einem Konverter durchgeführt werden. Mit Vorteil wird hiebei so vorgegangen, daß die Mischung der Schlacken in einem bodenblasenden Konverter vorgenommen wird, wobei das gebildete CO in der Müllverbrennungsanlage, insbesondere in einem Einschmelzoxidationsreaktor, nachverbrannt wird. Jeweils eine Teilmenge aus der Müllverbrennung kann unmittelbar granuliert und zu puzzolanischen Materialien aufgearbeitet werden. Derartige puzzolanische Endprodukte können mit der synthetischen Hochofenschlacke nach dem Granulieren zu einem Mischzement zusammengeführt werden, sodaß auch hier die gewünschte Mischzementqualität in weiten Grenzen eingestellt werden kann.

Bei der Aufarbeitung von Schredderleichtfraktion können sich Teile der in dieser Fraktion enthaltenen Schwermetalle in einem Einschmelzoxidationsreaktor in Form von Chloriden, Schwefelverbindungen oder Oxiden verflüchtigen, sodaß die Abgase einer entsprechenden Reinigung unterworfen werden müssen.

Bei der Vermischung der Schlacken aus der Müllverbrennung und dem LD-Stahlverfahren in einem Mengenverhältnis von etwa 1 zu 1 wird der Rohstahl aus der LD-Schlacke unmittelbar sedimentiert, wobei hier ca. 200 kg/t Mischschlacke Rohstahl gebildet werden. Das jeweilig gewünschte Reduktionspotential kann mit Kohlenstoff, Sauerstoff und Aluminium eingestellt werden. Das bei der Reduktion des Schlackengemisches gebildete CO kann auch in den Mischreaktor eingeführt werden, sodaß dort ohne zusätzliche Energie eine flüssige Schlackenmischung sicher aufrechtehalten werden kann. Große Abwärmemengen fallen auf hohem Temperaturniveau an, wobei im Zuge des erfindungsgemäßen Verfahrens überschüssige Wärmemengen verstromt oder zur Schlackentrocknung benutzt werden können. Wesentlicher Aspekt der erfindungsgemäßen Verfahrensführung ist somit neben der Verwendung von Autoschredderleichtfraktionen die relativ einfache Entsorgung von Hüttenstäuben sowie die Umwandlung von Stahlschlacken, insbesondere in flüssiger Form zu brauchbaren Endprodukten, wie beispielsweise synthetischer Hochofenschlacke.

Das in einem bodenblasenden Konverter gebildete CO kann in der Regel zu wenigstens 30 % nachverbrannt werden, wobei der Wärmeübertragungswirkungsgrad bei wenigstens 85 % liegt. Die restliche Verbrennung kann hiebei in vorteilhafter Weise im Einschmelzoxidationsreaktor der ersten Stufe, in welchem die Müllverbrennung stattfindet, vorgenommen werden, wobei ein gesonderter Schlackenmischer entfallen kann.

Gleichzeitig kann durch das erfindungsgemäße Verfahren aber auch dann, wenn beispielsweise der Phosphorgehalt in der Schlakke und im Stahl zu hoch wäre, eine entsprechende Verbesserung und Adjustierung vorgenommen werden. Mit Vorteil wird hiebei so vorgegangen, daß die Schlacke während der Oxidation bzw. beim Zusatz von Stahlwerksstäuben und/oder der Reduktion der Schlacke auf FeO-Gehalte von größer 1 Gew.-% mit CaO abgedeckt wird oder CaO eingeblasen wird, worauf das gebildete Thomasmehl bzw. Apatit ausgebracht wird. Durch diese Verfahrensweise wird sichergestellt, daß Phosphor oxidiert wird und mit dem Kalksatz zu Phosphaten reagiert. Bei dieser Oxidation kann gegebenenfalls Zink und Blei aus den heißen Gasen abgetrennt werden, wobei insbesondere dann, wenn der Eisenoxidgehalt der Schlacke größer als 1 bis 2 Gew.-% gehalten wird, Phosphor aus dem Roheisen reagiert und Chrom, Mangan und Vanadium in der Schlacke verbleiben. Mit Rücksicht auf die mehrfachen Reduktionsschritte kann das Verfahren in einzelnen Phasen so geführt werden, daß Chrom sicher reduziert wird und als Ferrochrom ausgetragen wird, sodaß insgesamt ein wesentlicher reineres Endprodukt als mit bekannten Verfahren erzielt werden kann.

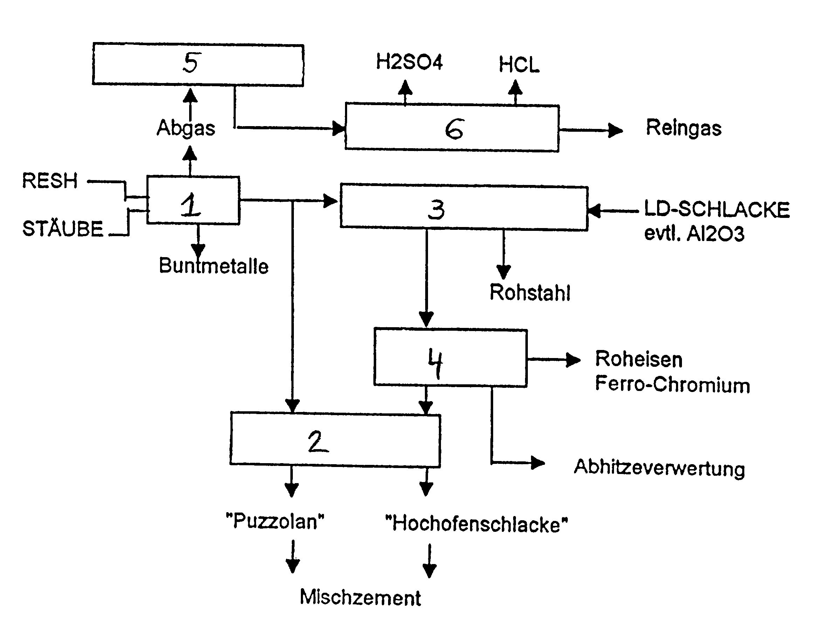

Die Erfindung wird nachfolgend anhand eines Flußdiagrammes in der Zeichnung näher erläutert. In der Zeichnung wird einem Einschmelzvergaser 1 Schredderleichtfraktion zugeführt. Gemeinsam mit Schredderleichtfraktion werden Hüttenstäube eingebracht. Aus dem Einschmelzvergasungsreaktor werden Buntmetalle ausgetragen, wobei die Schlacke teilweise einem Granulator 2 zugeführt wird, wodurch unmittelbar puzzolanische Materialien gebildet werden.

Die Schlacke des Einschmelzvergasungsreaktors der Müllverbrennungsanlage wird einer Schlackenmischvorrichtung 3 zugeführt. Alternativ kann sie unmittelbar einem Reduktionskonverter 4 aufgegeben werden, wobei durch entsprechende Gasführung im Reduktionskonverter eine intensive Durchmischung vorgenommen werden kann. Aus dem Schlackenmischer 3, welchem Stahlwerksschlacke, insbesondere LD-Schlacke gemeinsam mit Al₂O₃ zugesetzt wird, kann aufgrund der Herabsetzung der Viskosität Rohstahl entnommen werden. Die Abscheidung von Rohstahl kann naturgemäß auch im Reduktionskonverter erfolgen, wobei hier beispielsweise durch Aluminiumzusatz kohlenstoffreies Ferrochromium gebildet werden kann. Aus dem Reduktionskonverter kann weiters Roheisen abgezogen werden.

Die Abhitze aus dem Einschmelzvergasungsreaktor 1 der Müllverbrennungsanlage kann einer Abhitzeverwertung 5 mit nachfolgender Abgasreinigung 6 unterworfen werden. Bei der Reinigung von Abgasen könnten je nach Reinigungstechnik beispielsweise Produkte, wie H₂SO₄ und HCL gewonnen werden.

Die Abhitzeverwertung für die Abgase aus dem Reduktionskonverter 4 kann prinzipiell analog geführt werden, wobei eine aufwendige Reinigung hier in der Regel entfallen kann. Die im Reduktionskonverter 4 gebildete Schlacke kann als synthetische Hochofenschlacke bezeichnet werden und gleichfalls dem Granulator 2 zugeführt werden. Die granulierte Hochofenschlacke kann gemeinsam mit den granulierten puzzolanischen Materialien als Mischzement zum Einsatz gelangen.

## Patentansprüche

1. Verfahren zum Herstellen von Roheisen, Buntmetall-Legierungen, Ferrochromium-Carbure oder kohlenstoffreiem Ferrochromium und synthetischen Hochofenschlacken unter Verwendung von metalloxidhaltigen Müllverbrennungsrückständen oder Schlacken, dadurch gekennzeichnet, daß die Einsatzmaterialien der Müllverbrennung, wie z.B. Autoschredderleichtfraktionen bzw. Hüttenstäube zumindest teilweise oxidiert und anschließend unter Abscheidung von Nichteisen-Metallen oder Legierungen reduziert werden (1), worauf die an Metallen oder Legierungen abgereicherte oxidische Schlackenphase gegebenenfalls unter weiterem Zusatz von Hüttenstäuben mit flüssiger Stahlwerksschlacke vermischt wird (3), worauf unter Absenkung der Viskosität der Stahlwerksschlacke Rohstahl abgezogen wird und der verbleibende Schlackenanteil einer weiteren Reduktion (4) unter Gewinnung von Roheisen und gegebenenfalls Fe-Chromlegierungen unterworfen wird, worauf die resultierende synthetische Hochofenschlacke ausgebracht wird.

2. Verfahren nach Anspruch 1, dadurch gekennzeichnet, daß eine erste Reduktion (1) bis zu einem FeO-Gehalt der Schlacke von mehr als 1 Gew.-%, vorzugsweise mehr als 2 Gew.-% und weniger als 5 Gew.-%, vorgenommen wird und daß eine zweite Reduktion (4) mit von C verschiedenen Reduktionsmitteln, wie z.B. Al, zum Abscheiden von Cr, Mn und oder V vorgenommen wird.

3. Verfahren nach Anspruch 1 oder 2, dadurch gekennzeichnet, daß die synthetische Hochofenschlacke granuliert (2) und gemeinsam mit granulierter puzzolanischer Schlacke aus der Müllverbrennung als Mischzement eingesetzt wird.

4. Verfahren nach Anspruch 1, 2 oder 3, dadurch gekennzeichnet, daß die an Nichteisen-Metallen oder Legierungen abgereicherte oxidische Schlackenphase der Müllverbrennung in einem Gewichtsverhältnis von 30 zu 70 bis 50 zu 50 mit LD-Schlacke vermischt wird (3).

5. Verfahren nach einem der Ansprüche 1 bis 4, dadurch gekennzeichnet, daß der Stahlwerks- bzw. LD-Schlacke vor oder während der Vermischung mit der Müllverbrennungsschlacke Al₂0₃ zugesetzt wird (3).

6. Verfahren nach einem der Ansprüche 1 bis 5, dadurch gekennzeichnet, daß Al₂O₃ der Schlacke in Mengen von 10 bis 25 Gew.-% bezogen auf die reduzierte Schlacke zugesetzt wird (3).

7. Verfahren nach einem der Ansprüche 1 bis 6, dadurch gekennzeichnet, daß die Abtrennung der Metalle oder Legierungen aus der Müllverbrennungsschlacke in einer zweistufigen Reduktion (4) über einem Metallbad erfolgt.

8. Verfahren nach einem der Ansprüche 1 bis 7, dadurch gekennzeichnet, daß die Müllverbrennung unter Einsatz von Schredderleichtfraktionen und Hütten- oder Müllverbrennungsstäuben im Gewichtsverhältnis 0,7 bis 1,5 zu 2 vorgenommen wird.

9. Verfahren nach einem der Ansprüche 1 bis 8, dadurch gekennzeichnet, daß die Mischung der Schlacken in einem bodenblasenden Konverter (4) vorgenommen wird, wobei das gebildete CO in der Müllverbrennungsanlage, insbesondere in einem Einschmelzoxidationsreaktor (1), nachverbrannt wird.

10. Verfahren nach einem der Ansprüche 1 bis 9, dadurch gekennzeichnet, daß die Schlacke während der Oxidation bzw. beim Zusatz von Stahlwerksstäuben und/oder der Reduktion der Schlacke auf FeO-Gehalte von größer 1 Gew.-% mit CaO abgedeckt wird oder CaO eingeblasen wird, worauf das gebildete Thomasmehl bzw. Apatit ausgebracht wird.

## Claims

1. A method of producing pig iron, nonferrous metal alloys, ferrochromium carburé or carbon-free ferrochromium and synthetic blast furnace slags using metal-oxide-containing waste incineration residues or slags, characterized in that the charging materials from waste incineration such as, e.g., car shredder light fractions and/or metallurgical dusts are oxidized at least partially and subsequently are reduced (1) while separating nonferrous metals or alloys, whereupon the oxidic slag phase depleted of metals or alloys is mixed (3) with molten steelworks slag optionally upon further addition of metallurgical dusts, whereupon crude steel is drawn off while lowering the viscosity of the steelworks slag and the remaining slag portion is subjected to a further reduction (4) while recovering pig iron and optionally Fe-chromium alloys, whereupon the resulting synthetic blast furnace slag is discharged.

2. A method according to claim 1, characterized in that a first reduction (1) is effected as far as to an FeO content of the slag of more than 1% by weight, preferably more than 2% by weight and less than 5% by weight, and that a second reduction (4) is effected by the aid of reductants other than C such as, e.g., Al for separating Cr, Mn and/or V.

3. A method according to claim 1 or 2, characterized in that the synthetic blast furnace slag is granulated (2) and, along with granulated puzzolanic slag from waste incineration, is used as a mixed cement.

4. A method according to claim 1, 2 or 3, characterized in that the oxidic slag phase derived from waste incineration and depleted of nonferrous metals or alloys is mixed (3) with LD slag at a weight ratio of from 30 to 70 to 50 to 50.

5. A method according to any one of claims 1 to 4, characterized in that Al₂O₃ is added (3) to the steelworks slag or LD slag prior to or during mixing with said waste incineration slag.

6. A method according to any one of claims 1 to 5, characterized in that Al₂O₃ is added (3) to the slag in amounts of from 10 to 25% by weight, based on the reduced slag.

7. A method according to any one of claims 1 to 6, characterized in that the separation of said metals or alloys from said waste incineration slag is effected in a two-stage reduction (4) above a metal bath.

8. A method according to any one of claims 1 to 7, characterized in that waste incineration is carried out using shredder light fractions and metallurgical or waste incineration dusts at a weight ratio of from 0.7 to 2 to 1.5 to 2.

9. A method according to any one of claims 1 to 8, characterized in that mixing of said slags is carried out in a bottom-blowing converter (4), wherein the CO formed is afterburned in the waste incineration plant, in particular in a meltdown oxidizing reactor (1).

10. A method according to any one of claims 1 to 9, characterized in that the slag is covered by CaO, or CaO is blown in, during oxidation respectively during the addition of steelworks dusts and/or the reduction of the slag to FeO contents of more than 1% by weight, whereupon the formed Thomas meal or apatite, respectiely, is discharged.

## Revendications

1. Procédé pour produire de la fonte brute, des alliages de métaux lourds non ferreux, du carbure de ferro-chrome ou du ferro-chromé exempt de carbone et des scories synthétiques de haut fourneau moyennant l'utilisation de résidus d'incinération d'ordures ou de scories, qui renferment des oxydes métalliques, caractérisé en ce que les matières exploitables de l'incinération d'ordures, comme par exemple des fractions légères de déchets de shredders d'automobiles ou des poussières métallurgiques, sont, au moins en partie, oxydées, puis réduites (1), avec séparation de métaux non ferreux ou d'alliages, à la suite de quoi la phase de scorie ayant subi l'oxydation, appauvrie en métaux ou en alliages, est mélangée à de la scorie liquide d'aciérie (3), éventuellement avec une addition supplémentaire de poussières métallurgiques, à la suite de quoi, moyennant une diminution de la viscosité de la scorie d'aciérie, de l'acier brut est extrait et la part restante de scorie est soumise à une réduction supplémentaire (4), avec obtention de fonte brute et, le cas échéant, d'alliages de Fe et de chrome, à la suite de quoi la scorie synthétique de haut fourneau résultante est retirée.

2. Procédé selon la revendication 1, caractérisé en ce qu'une première réduction (1) est effectuée jusqu'à une teneur en FeO de la scorie de plus de 1 % en poids, de préférence de plus de 2 % en poids et de moins de 5 % en poids, et en ce qu'une deuxième réduction (4) est effectuée avec des agents de réduction différents du C, comme par exemple de l'Al, pour la séparation du Cr, du Mn et/ou du V.

3. Procédé selon la revendication 1 ou 2, caractérisé en ce que la scorie synthétique de haut fourneau est transformée en granulés (2) et est, conjointement avec de la scorie pouzzolanique en granulés provenant de l'incinération d'ordures, utilisée comme ciment mixte.

4. Procédé selon la revendication 1, 2 ou 3, caractérisé en ce que la phase de scorie, ayant subi l'oxydation, de l'incinération d'ordures, qui est appauvrie en métaux non ferreux ou en alliages, est mélangée à de la scorie LD (3), suivant un rapport pondéral de 30 à 70 jusqu'à 50 à 50.

5. Procédé selon l'une des revendications 1 à 4, caractérisé en ce que de l'Al₂O₃ est ajouté (3) à la scorie d'aciérie ou à la scorie LD, avant ou pendant le mélange avec la scorie d'incinération d'ordures.

6. Procédé selon l'une des revendications 1 à 5, caractérisé en ce que de l'Al₂O₃ est ajouté (3) à la scorie en des quantités de 10 à 25 % en poids, rapportées à la scorie réduite.

7. Procédé selon l'une des revendications 1 à 6, caractérisé en ce que l'extraction des métaux ou des alliages de la scorie d'incinération d'ordures se fait en une réduction en deux étapes (4), au moyen d'un bain métallique.

8. Procédé selon l'une des revendications 1 à 7, caractérisé en ce que l'incinération d'ordures est effectuée moyennant l'utilisation de fractions légères de déchets de shredders et de poussières métallurgiques ou d'incinération d'ordures, dans le rapport pondéral de 0,7 jusqu'à 1,5 à 2.

9. Procédé selon l'une des revendications 1 à 8, caractérisé en ce que le mélange des scories est réalisé dans un convertisseur à soufflage par le fond (4), le CO formé étant alors brûlé ultérieurement dans l'installation d'incinération d'ordures, notamment dans un réacteur d'oxydation par fusion (1).

10. Procédé selon l'une des revendications 1 à 9, caractérisé en ce que, pendant l'oxydation ou lors de l'addition de poussières d'aciérie et/ou de la réduction de la scorie jusqu'à des teneurs en FeO supérieures à 1 % en poids, la scorie est couverte avec du CaO ou du CaO y est insufflé, à la suite de quoi la scorie Thomas ou l'apatite, qui est formée, est retirée.
